Europäisches Patentamt

**European Patent Office**

**Office européen des brevets**

(11) Veröffentlichungsnummer: **0 328 878**

**A2**

## (12) EUROPÄISCHE PATENTANMELDUNG

(21) Anmeldenummer: **89100622.3**

(22) Anmeldetag: **14.01.89**

(51) Int. Cl.4: **B60P 1/64**

(30) Priorität: **13.02.88 DE 3804557**

(43) Veröffentlichungstag der Anmeldung:
**23.08.89 Patentblatt 89/34**

(84) Benannte Vertragsstaaten:
**AT BE CH DE ES FR GB GR IT LI LU NL SE**

(71) Anmelder: **Paul, Josef**
**An der alten Schmiede 1**
**D-8358 Vilshofen(DE)**

(72) Erfinder: **Paul, Josef**
**An der alten Schmiede 1**
**D-8358 Vilshofen(DE)**

(74) Vertreter: **Czowalla . Matschkur Patentanwälte**
**Dr.-Kurt-Schumacher-Strasse 23 Postfach**
**9109**
**D-8500 Nürnberg 11(DE)**

(54) **Nutzfahrzeug zum Transport von Containern.**

(57) Nutzfahrzeug mit einem Fahrzeugrahmen, ggf. mit aufgesetztem Hilfsrahmen, zur Aufnahme eines wechselbaren langgestreckten Containers, auf dem auf Laufschienen ein mit einer Antriebsvorrichtung versehener längsverschieblicher Wagen gelagert ist, der eine hydraulische Hubvorrichtung mit einem den Aufbau übergreifenden, ein Hubgeschirr zum Einhängen in die oberen Eckverschlüsse tragenden Auslegerarm zum Absetzen und Aufnehmen des Aufbaus trägt, wobei die Hubvorrichtung ein drehbar auf dem Wagen angeordneter Drehkran ist, dessen in Abstand vom Angriffspunkt eines hydraulischen Hubzylinders angeordnete Schwenkwelle in vertikale Führungsschlitze von Seitenwangen des Krangestells eingreift, derart, daß der Auslegerarm selbsttätig zwischen einer abgesenkten Fahrstellung und einer angehobenen Arbeitsstellung verstellbar ist, und daß das Hubgeschirr einen auf dem Container aufliegenden Kopfrahmen umfaßt, der über ein mit einer Antriebsvorrichtung versehenes Drehlager am Auslegerarm aufgehängt ist.

FIG. 2

## Nutzfahrzeug zum Transport von Containern

Die Erfindung bezieht sich auf ein Nutzfahrzeug mit einem Fahrzeugrahmen, ggf. mit aufgesetztem Hilfsrahmen, zur Aufnahme eines wechselbaren Containers, auf dem auf Laufschienen ein mit einer Antriebsvorrichtung versehener längsverschieblicher Wagen gelagert ist, der eine hydraulische Hubvorrichtung mit einem den Aufbau übergreifenden, ein Hubgeschirr zum Einhängen in die oberen Eckverschlüsse tragenden Auslegerarm zum Absetzen und Aufnehmen des Containers trägt.

Bei einer Vielzahl von Nutzfahrzeugtypen mit einem Wechselaufbau mit Hilfsrahmen ist vorgesehen, daß der Hilfsrahmen aus einem anhebbar und/oder kippbar am Fahrzeugrahmen angeordneten Trägerrahmen und einem auf diesem längsverschiebbaren, eine Gleitrampe bildenden Schieberahmen besteht. Zum Aufnehmen und Absetzen des Aufbaus wird dieser ausfahrbare Hilfsrahmen in Kippstellung gebracht, so daß er sich mit seinem Ende am Boden abstützt. Die Hubvorrichtung braucht dann den Aufbau lediglich am vorderen Ende anzuheben, um ihn dann bei der Längsverfahrung auf der Gleitrampe nach oben zu ziehen. Die hierbei erreichte Schräglage kommt den Verladern nicht entgegen, da in diesem Vorgang ein Kippwinkel erreicht wird, der ein Verrutschen der Ladung im Behälter nicht mehr ausschließt. Zum Überschieben auf andere Nutzfahrzeuge oder auf höhere Rampen oder dergl. wird der Hilfsrahmen ohne verkippt zu werden vertikal in seiner Höhe verstellt. Dieses Prinzip des Aufbaus eines Nutzfahrzeugs mit Wechselaufbau, welches bereits in vielfältigen unterschiedlichen Ausführungsformen vorgeschlagen worden ist, hat sich auch sehr bewährt, insbesondere für die Handhabung von Großcontainern, von denen ein einzelner den gesamten Aufbau eines Lkw's einnimmt. Schwierigkeiten können sich dabei allerdings dadurch ergeben, daß ein relativ genaues Rangieren des Nutzfahrzeugs bezüglich der anderen Fahrzeuge bzw. der Rampe erforderlich ist und daß darüber hinaus das Aufheben und Absetzen auf sehr hochliegenden Rampen bzw. Gegenfahrzeugen wegen der beschränkten Hubhöhe mit Schwierigkeiten verbunden ist. Vor allem aber läßt sich dabei ein Container nicht auf ein querstehendes Fahrzeug, insbes. einen Eisenbahnwaggon, und umgekehrt, übersetzen, da insbesondere dem Eisenbahnwaggon die notwendige Überschiebevorrichtung fehlt (Drehschemel). Um ein einfaches Aufheben und Absetzen eines Containers auf der Ladefläche eines Nutzfahrzeugs zu erreichen, sind - man vergl. hierzu beispielsweise die Deutsche Gebrauchsmusterschrift 1 893 821 sowie die Deutsche Offenlegungsschrift 27 53 962 - auch bereits Nutzfahrzeugaufbauten der eingangs beschriebenen Art vorgeschlagen worden, bei denen auf dem am Fahrzeugrahmen verfahrbaren Wagen ein Gabelstapler als Hubvorrichtung angeordnet ist, der den Container untergreift und auf der Ladefläche des Fahrzeugs absetzt.

Beide vorbekannte Nutzfahrzeugsysteme mit Wechselaufbau ermöglichen allerdings nur die Aufnahme von relativ kurzen Containern, da Großcontainer, beispielsweise 20'-Container, bei der Aufnahme mit Hilfe eines solchen Gabelstaplers - unabhängig von der Länge der Gabelstaplerarme - eine derartige Hecklastigkeit zur Folge haben, daß das gesamte Fahrzeug beim Aufnehmen oder Absetzen des vollständig nach hinten über den Fahrzeugrahmen überstehenden Containers unweigerlich umkippen müßte.

Aus diesem Grund ist in der älteren Anmeldung (P 37 08 066.0) bereits für die vereinfachte Handhabung von Großcontainern ein Nutzfahrzeug vorgeschlagen worden, auf dessen Fahrzeugrahmen ein ortsfest gelagertes, parallel zum Fahrzeugrahmen anhebbares Drehlager vorgesehen ist, mit einer unteren, über einen Niveauausgleich parallel zum Fahrzeugrahmen vertikal anhebbaren Drehlagerplatte und einem drehbaren oberen Drehteller zum Anheben und Verschwenken eines den Aufbau tragenden, lösbar auf dem Fahrzeugrahmen verriegelten Container-Tragrahmens mit Containereckverschlüssen zwischen der Fahrstellung und einer um 90° verdrehten Aufnahme- bzw. Absetzstellung, in welcher am Drehlager befestigte, in der Fahrstellung quer zur Fahrzeuglängsachse verlaufende Schienenabschnitte die Lücke der Laufschienen des Fahrzeugrahmens schließen.

Durch diese Ausbildung wird erreicht, daß der Container grundsätzlich quer zu seiner Längsrichtung von der hydraulischen Hubvorrichtung, die anstelle eines den Container übergreifenden Hubgeschirrs auch ein Gabelstapler sein kann, auf- und abgesetzt werden kann, wodurch ein starker hecklastiger Überstand und damit die Gefahr eines Verkippens des Fahrzeugs mit dem hochgehobenen Container vermieden ist. Diese Konstruktion hat sich in der Praxis zwar sehr bewährt, erfordert jedoch ein relativ aufwendiges Drehlager, welches darüber hinaus relativ hoch baut. Das dabei weiter vorgesehene faltbare Hubgeschirr muß zum Transport geschwenkt und mit nach vorne gerichteten eingefalteten Armen zwischen Führerhaus und Aufbau angeordnet sein, übergreift also nicht auch in der Transportstellung den Aufbau.

Der Erfindung liegt daher die Aufgabe zugrunde, ein Nutzfahrzeug der eingangs genannten Art so auszugestalten, daß ohne die Notwendigkeit eines komplizierten anhebbaren Drehlagers im Fahrzeugrahmen durch entsprechende Gestaltung der Hubvorrichtung in gleicher Weise ein Auf- und Umsetzen von Großcontainern beliebig (im Leerzustand) nach rückwärts und seitlich zum Fahrzeug erzielt werden kann, wobei die Hubvorrichtung auch in der Transportstellung in einer den Container übergreifenden Position verbleiben kann.

Zur Lösung dieser Aufgabe ist erfindungsgemäß vorgesehen, daß die Hubvorrichtung ein drehbar auf dem Wagen angeordneter Drehkran ist, dessen in Abstand von einem hydraulischen Hubzylinder angeordnete Schwenkwelle in vertikale Führungsschlitze von Seitenwangen des Krangestells eingreift, derart, daß der Auslegerarm selbsttätig zwischen einer abgesenkten Ruhestellung und einer angehobenen Arbeitsstellung verstellbar ist, und daß das Hubgeschirr einen auf dem Aufbau aufliegenden Kopfrahmen umfaßt, der über ein mit einer Antriebsvorrichtung versehenes Drehlager am Auslegerarm aufgehängt ist.

Die Ausbildung der hydraulischen Hubvorrichtung als Drehkran hat zunächst den Vorteil, daß der Aufbau nicht nur nach rückwärts überschoben oder abgesetzt werden kann, sondern daß der Container genauso problemlos auch seitlich neben dem Fahrzeug abgesetzt und auch von dort wieder aufgenommen werden kann. Von besonderer Bedeutung ist in diesem Zusammenhang das Drehlager zwischen dem Auslegerarm und dem Container, da nur auf diese Weise in beliebiger schräg ausgeschwenkter Stellung des Auslegerarms auch der parallel oder auch versetzt seitlich neben dem Fahrzeug angeordnete Container handhabbar ist. Entsprechend das Gleiche gilt natürlich auch für das Aufnehmen eines quer hinter dem Fahrzeug stehenden Containers. Die Verlagerung des Drehlagers entweder unmittelbar in den Kopf des Auslegerarms, oder bevorzugt in den Kopfrahmen, was weiter unten noch im einzelnen beschrieben werden soll, ist gegenüber einem anhebbaren Drehlager im Rahmen, wie bei dem älteren Vorschlag, baulich wesentlich einfacher, läßt sich sehr flach realisieren und bietet gleichwohl hervorragende Möglichkeiten, den Auslegerarm flach in der Transportstellung auf dem Aufbau abzulegen.

Ein ganz besonders wesentliches Konstruktionsmerkmal der vorliegenden Erfindung besteht in der längsverschiebbaren Anordnung der Schwenkwelle in vertikalen Führungsschlitzen. Durch diese ergibt sich ausgehend von einer möglichst niedrigbauenden Konstruktion, um die maximal zulässigen Fahrzeughöhen nicht zu überschreiten, gleichwohl die Möglichkeit, eine ausreichende Manövrierfreiheit für den Auslegerarm zu erhalten, da beim Ausfahren des Hubzylinders für den Auslegerarm wegen des übergewichtigen Aufbaus zunächst immer das gegenüberliegende Schwenkende des Auslegerarms angehoben wird, wodurch der Auslegerarm über den Aufbau angehoben wird, so daß dann auch ein Verschwenken des Aufbaus unter dem Auslegerarm mit Hilfe des bereits angeprochenen Drehlagers möglich ist.

Um die ebenfalls bereits angesprochene flache Auflegbarkeit des Auslegerarms auf den Aufbau, und damit das Verbleiben des Auslegerarms über dem Aufbau in der Transportstellung zu ermöglichen, kann in Ausgestaltung der Erfindung vorgesehen sein, daß vier schwenk bar am Auslegerarm aufgehängte Streben in nach außen offene Haken des Kopfrahmens eingreifen, was sehr einfach dadurch realisiert werden kann, daß die Haken jeweils durch die unterschnittenen Enden zweier parallel zueinander auf dem Drehteller des Drehlagers befestigten Streben gebildet sind. Wird in der Längsabsetzstellung des Containers auf dem Fahrzeugrahmen der Hubzylinder des Drehkrans eingefahren und senkt sich somit der Auslegerarm ab, so rutschen die Enden der vier Streben dabei einfach aus den genannten Haken heraus und legen sich ebenso wie der Auslegerarm flach auf den Container bzw. den darüber angeordneten Kopfrahmen auf. Beim Wiederanheben bleiben ihre Enden aufgrund des Eigengewichts gleitend auf dem Rahmen bzw. auf dem Aufbau liegen und werden damit zwangsläufig wieder in die Haken eingefahren, wobei eine besondere Arretierung in den Haken wegen des hohen Gewichts des daranhängenden Containers im Betrieb gar nicht mehr erforderlich ist.

Mit besonderem Vorteil kann dabei gemäß einem weiteren Merkmal der Erfindung vorgesehen sein, daß das Drehlager Teil einer im Kopfrahmen mittels Hydraulikzylindern längsverschiebbar gelagerten Beladeausgleichsplatte ist, wobei die Beladeausgleichsplatte in einem Ausschnitt den Drehkranz tragen bzw. bilden kann.

Auf diese Weise ist es mit Hilfe einer äußerst einfachen Konstruktion möglich, die nie zu vermeidenden ungleichen Beladungen eines Containers auszugleichen. In der Praxis fällt nämlich der Schwerpunkt eines beladenen Containers nie mit dem Längsmittelpunkt zusammen, so daß dieser beim Anheben mit einem Hubgeschirr entweder verkippen würde, oder aber erhebliche Kräfte von der Aufhängung des Hubgeschirrs zur Verhinderung eines solchen Verkippens abgefangen werden müßten. Dies vermeidet die erfindungsgemäße Konstruktion mit einer das Drehlager tragenden Beladeausgleichsplatte in extrem einfacher Weise, da diese einfach so weit verschoben wird, bis der Mittelpunkt des Drehlagers mit dem tatsächlichen Schwerpunkt des beladenen Container-Aufbaus zusammenfällt. Um größere Freiheiten beim Auf- und Absetzen des Containers zu haben, kann nach einem weiteren Merkmal der vorliegenden Erfindung auch vorgesehen sein, daß der Auslegerarm teleskopisch ausfahrbar ist. Auch der Wagen könnte über einen sog. Doppelauszug, der im höherliegenden Hauptrahmen integriert ist, bis zum Ende des tieferliegenden Rahmens gefahren werden. Es ist auf diese Weise dann möglich, den Container um mehr als die halbe Länge gegenüber der Mittelachse des Fahrzeugs versetzt seitlich neben dem Fahrzeug abzusetzen oder auch von dort wieder aufzunehmen, falls aufgrund der örtlichen Gegebenheiten ein näheres Hinrangieren an den Aufstellort nicht möglich wäre.

Um den Container neben der durch den erfindungsgemäßen speziellen Drehkran gegebenen Auf- und Absetzmöglichkeiten auch einfach durch Hochkippen bei Beladung mit Schüttgut entleeren zu können, kann zusätzlich eine den Container um eine hintere Schwenkachse in eine Kippstellung verschwenkende, an beiden Seiten des Krans angeordnete hydraulische Presse vorgesehen sein, wobei der Container zu diesem Zweck bevorzugt auf einem schwenkbar auf dem Rahmen angeordneten Tragrahmen mit Containereckverschlüssen sitzen soll bzw. bei entsprechender Fertigung für ein solches Fahrzeug mit einem entsprechenden Rahmen auf der Unterseite versehen ist.

Um die hohen Lasten möglichst problemlos in die Laufschienen des Wagens übertragen zu können, ist bei einem Nutzfahrzeug in Form eines Lkw erfindungsgemäß vorgesehen, daß der dem Aufbau abgewandte vordere Abschnitt des Wagens zur besseren Krafteinleitung ausfahrbar ist, so daß die Abstände der vorderen und hinteren Räder größer werden. Bei einem Sattelauflieger ergibt sich eine andere Möglichkeit für eine günstige Krafteinleitung in die Laufschienen, indem ein langgestreckter Wagen vorgesehen ist, der sich mit dem vorderen Ende auf der Lauffläche des höherliegenden Aufliegerteils und am hinteren Ende auf der Lauffläche des tieferliegenden Hauptrahmens für den Aufbau verfahrbar abstützt, wobei selbstverständlich der Wagen auf diese Weise im wesentlichen L-förmig mit einem tieferliegenden hinteren Abschnitt gestaltet sein muß.

Weitere Vorteile, Merkmale und Einzelheiten der Erfindung ergeben sich aus der nachfolgenden Beschreibung zweier Ausführungsbeispiele sowie anhand der Zeichnung. Dabei zeigen:

Fig. 1 einen Sattelauflieger mit einem erfindungsgemäß ausgestatteten Drehkranaufbau in der abgesetzten Fahrstellung des Drehkran-Auslegerarms,

Fig. 2 eine Seitenansicht des Aufbaus mit hochgefahrenem Auslegerarm unmittelbar vor dem Abheben des Containers vom Fahrzeugrahmen,

Fig. 3 eine Seitenansicht des Sattelaufliegers nach den Figuren 1 und 2 in der Absetzstellung und strichpunktiert beginnenden Aufhebestellung des Aufbaus hinter dem Fahrzeug,

Fig. 4 eine vergrößerte Seitenansicht der Aufhängung zwischen dem Kopfrahmen auf der Oberseite des Contaienrs und dem Auslegerarm in der angehobenen Stellung und - strichpunktiert - in einer Zwischenstellung kurz vor Erreichen der Fahrstellung nach Fig. 1,

Fig. 5 eine Aufsicht auf das Fahrzeug mit einem seitlich daneben abgesetzten Containers, wobei darüber hinaus auch mögliche andere Absetzstellungen schematisch mit eingezeichnet sind,

Fig. 6 eine vergrößerte Aufsicht auf den Aufbau mit dem an seinen oberen Containereckverschlüssen zu befestigenden Kopfrahmen mit einem verschiebbaren Drehlager,

Fig. 7 einen Schnitt längs der Linie VII-VII in Fig. 6,

Fig. 8 eine schematische Seitenansicht des Sattelaufliegers mit angekipptem Aufbau,

Fig. 9 eine abgewandelte Ausführungsform eines erfindungsgemäßen Nutzfahrzeugs in Form eines Lkw's,

Fig. 10 eine Aufsicht auf den Lkw gemäß Fig. 9,

Fig. 11 eine vergrößerter Seitenansicht des Lkw in der angehobenen Stellung des am vorderen Ende einen Drehkopf tragenden Auslegerarms, und

Fig. 12 eine Teilstirnansicht des Lkw-Aufbaus in der abgesenkten Stellung des Auslegerarms in Richtung des Pfeils XII in Fig. 11.

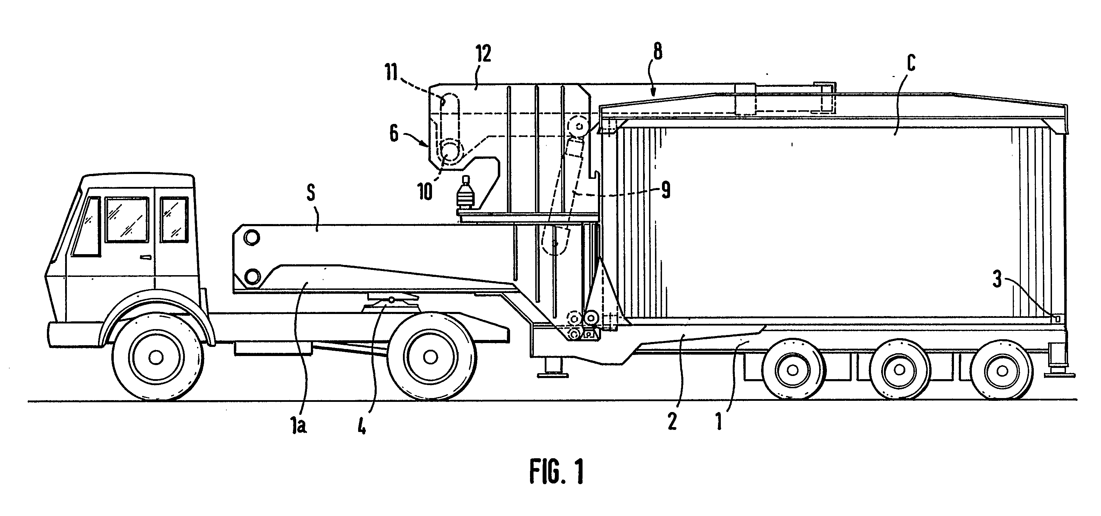

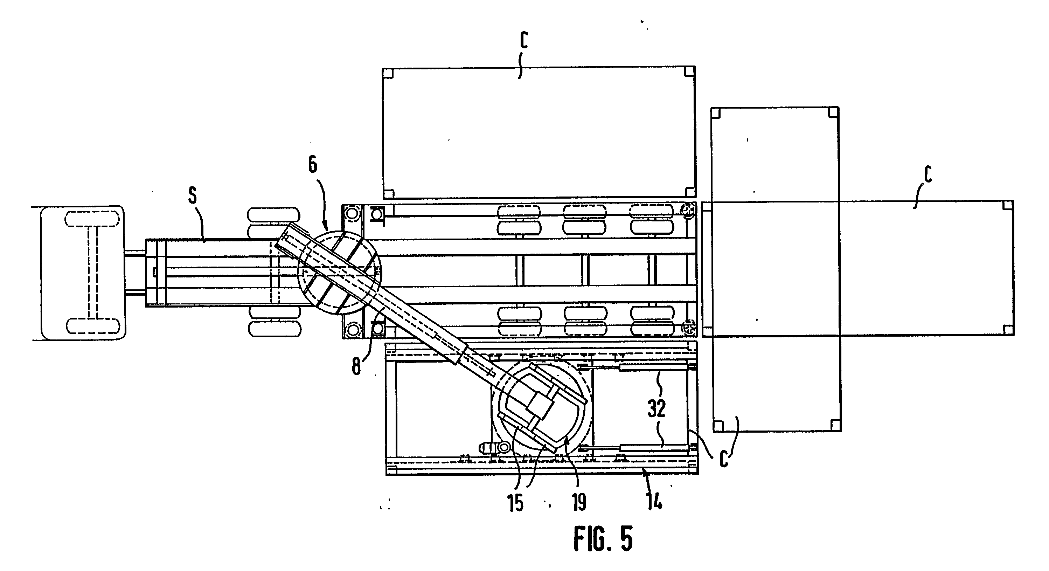

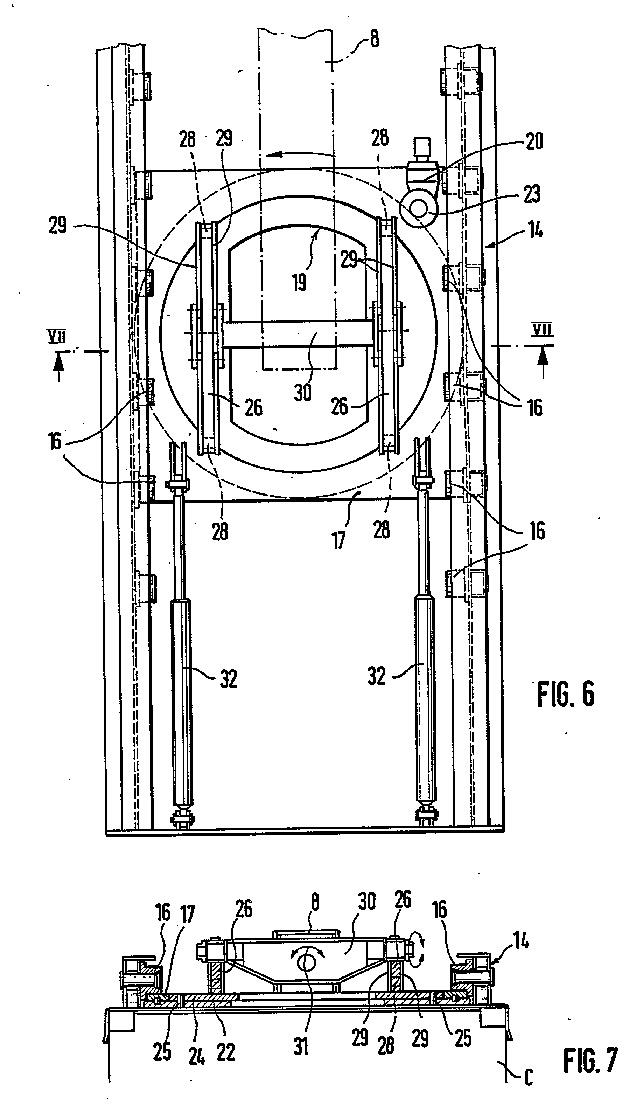

Auf dem Sattelaufliegerhauptrahmen 1 des in den Figuren 1 bis 8 dargestellten Sattelaufliegers ist über einen Container-Tragrahmen 2 mit üblichen Containereckverschlüssen 3 ein großer 20′-Container C aufgesetzt. Der abgewinkelte vordere Abschnitt 1a des Sattelaufliegers ist über ein übliches Drehlager 4 am Zugfahrzeug angelenkt. Er trägt auf seiner Oberseite schematisch angedeute Laufschienen 5a, ebenso wie Laufschienen 5b, die als Sattelauflieger-Hauptrahmen vorgesehen sind. Diese bevorzugt als Doppel-T-Träger ausgebildeten Laufschienen dienen zum Verfahren eines Wagens S, der einen Drehkran 6 trägt, wobei das Verfahren über die Laufschienen über- und untergreifende Rollen erfolgt, was jedoch in diesem Zusammenhang bereits bekannt und beispielsweise auch in der genannten älteren Anmeldung im einzelnen beschrieben ist.

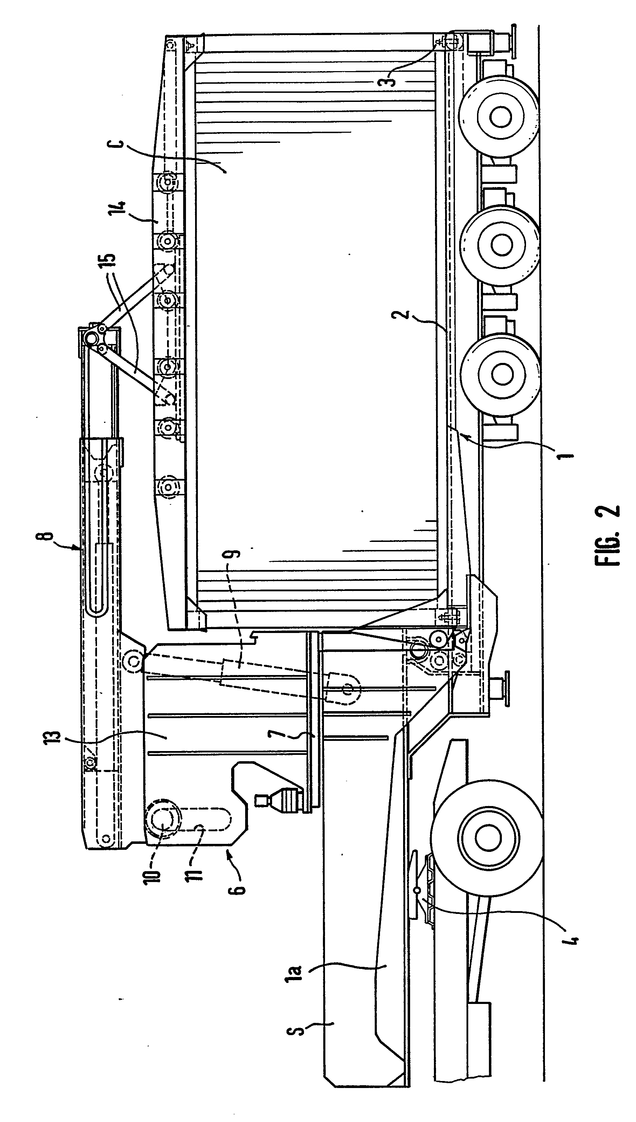

Auf dem Wagen S ist über ein Drehlager 7 der Drehkran 6 rundum drehbar gelagert, der einen teleskopisch ausfahrbaren Auslegerarm 8 umfaßt. Eine Besonderheit des erfindungsgemäßen Drehkrans besteht in der Ausbildung seiner vom Anlenkpunkt des Hubzylinders 9 beabstandeten Schwenkachse 10 in vertikalen Führungsschlitzen 11 der Seitenwangen 12 des Traggestells 13. Durch diese vertikalen Führungsschlitze kann einerseits der Auslegerarm 8 in eine sehr flache auf dem als Container C ausgebildeten Aufbau abgelegten Fahrstellung (Fig. 1) in die angehobene Betriebstellung hochgehoben werden, wie sie in den Figuren 2 bis 8 dargestellt ist, in der dann der Container C unter dem Auslegerarm 8 frei drehbar ist.

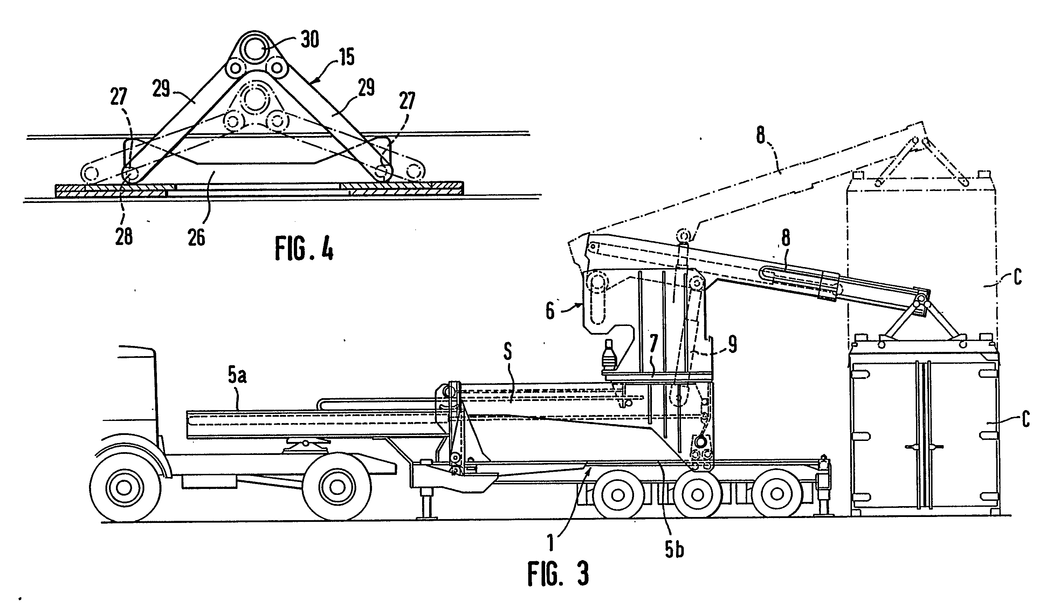

Die Verdrehbarkeit ergibt sich dabei durch ein in den Kopfrahmen 14 eines Hubgeschirr eingebautes Drehlager, welches nachstehend noch im einzelnen beschrieben werden soll. Der Kopfrahmen 14 ist wiederum mit Hilfe von üblichen Containereckverschlüssen mit den oberen Containereckverschlüssen des Containers C verbunden, wobei die Aufhängung am Auslegerarm mit Hilfe von vier schwenkbar am Auslegerarm angelenkten Trag-Streben 15 erfolgt. Unter einer Vielzahl von Trag-Laufrollen 16 des Kopfrahmens 14 ist längsverschieblich eine Beladeausgleichsplatte 17 mit einer kreisförmigen Ausnehmung 18 versehen, in und unter der ein Drehteller 19 drehbar gelagert ist, der mit Hilfe eines an der Beladeausgleichsplatte befestigten Motors 20 angetrieben wird. Der Drehteller 19 umfaßt die Beladeausgleichsplatte 17 untergreifende Platte 22 mit der Außenverzahnung für das Antriebsritzel 23 des Antriebsmotors 20 sowie die in die kreisförmige Aussparung 18 führend eingreifende obere Platte 24, die mit Hilfe von Stiften 25 zentriert ist, und miteinander verbunden sind. Auf der oberen Platte 24 des Drehtellers 19 sind zwei parallel zueinander befestigte kräftige Streben 26 befestigt, die an ihren beiden Enden zur Bildung von Haken mit Hinterschneidungen 27 versehen sind. In diese Hinterschneidungen greifen die Querachsen 28 der aus zwei beabstandeten dünnen Metallplatten 29 bestehenden Tragerarme 15 ein, wobei durch weiteres Herunterfahren des Auslegerarms 8 diese Querbolzen 28 aus den Haken 27 austreten, (vergl. Fig. 4 die strichpunktierte Stellung), so daß die Arme 15 und der Auslegerarm 8 flach auf die Oberseite des Containers abgelegt werden können. Wird der Auslegerarm 8 wieder hochgehoben, so gleiten die aufgrund ihrer Schwerkraft nach unten hängenden Arme 15 nach innen, bis schließlich die Querbolzen 28 wieder in die Haken 27 eingreifen. Mit 30 ist ein Querträger bezeichnet, der um die Längsachse des Auslegerarms im Sinne des Doppelpfeils 31 schwenkbar ist und der an seinen Außenseiten die Trag-Streben 15, bestehend aus den beiden parallelen Metallplatten 29 und dem Querbolzen 28, trägt. Die Beladeausgleichs-platte 17 mit dem vorstehend im einzelnen beschriebenen Drehlager kann mit Hilfe von Hydraulikzylindern 32 unter den Rollen 16 so verschoben werden, daß der Mittelpunkt des Drehlagers mit dem häufig außerhalb des geometrischen Mittelpunkts des Aufbaus liegenden Schwerpunkt des beladenen Containers zusammenfällt, so daß das Abfangen von Verkippungskräften oder gar eine daraus resultierende Verkippung des Aufbaus beim Hochheben vermieden ist. Dabei erfolgt die Betätigung der Hydraulikzylinder 32 mit dem Anheben des Containers. Sobald man bemerkt, daß das Anheben nicht vorn und hinten gleichmäßig erfolgt, sondern das vordere oder hintere Ende zunächst angehoben wird, wird mit Hilfe der Hydraulikzylinder 32 die Beladeausgleichsplatte entsprechend zum schwereren untenliegenden Ende verschoben, bis die richtige Position erreicht ist. Erst dann wird endgültig der Container aufgenommen und seitlich oder nach hinten abgesetzt oder übergeschoben. Die Verlagerung des Drehlagers in den Kopfrahmen ermöglicht neben dem gezeigten extrem einfachen Aufbau, der darüber hinaus auch sehr flach baut, ein einfaches Aufnehmen des Aufbaus auch seitlich neben dem Fahrzeug, nicht nur wie herkömmliche Konstruktionen von der Rückseite her. In gleicher Weise kann ein hinter dem Fahrzeug quer abgestellter Container nach dem Aufnehmen in die Aufsetz- und Fahrstellung gedreht werden, wobei die Darstellung eines längs hinter dem Fahrzeug abgestellten Containers eine Möglichkeit wiederspiegelt, die selbstverständlich in der Praxis nur bei leeren oder wenig beladenen Containern ausnutzbar ist, da ein längs abgestellter Container wegen der größen Kippkräfte bei voller Beladung nicht hochgehoben und aufgenommen werden könnte.

Die erfindungsgemäßen vertikalen Führungsschlitze 11 sind, wie man insbesondere aus Fig. 3 erkennen kann, auch für das Aufnehmen und Absetzen von Bedeutung, da auf diese Weise der notwendige Freiraum zwischen dem Auslegerarm 8 und der Kante des Aufbaus erzielt wird, so daß auch die in Fig. 3 gezeigte schräge Anhebstellung erzielbar ist, die beispielsweise notwendig ist, um zwei Container übereinander zu stapeln bzw. einen Containeraufbau auf einer erhöhten Laderampe od.dgl. bzw. von einem erhöht stehenden Eisenbahnwaggon aufzunehmen bzw. darauf abzusetzen.

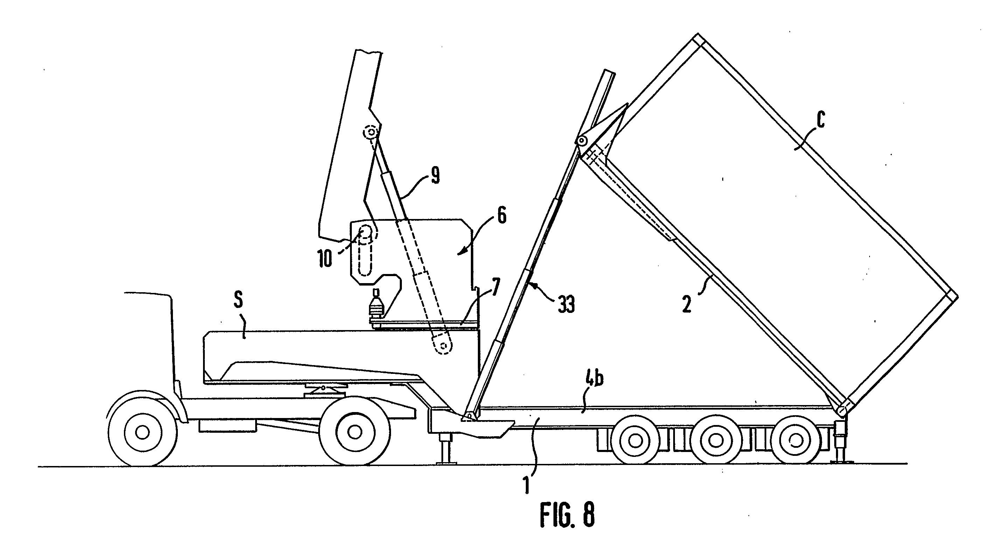

Die Figur 8 zeigt schematisch die Möglichkeit des Ankippens des Containers C, wobei zu diesem Zweck selbstverständlich zunächst der Container-Tragrahmen 2 am hinteren Ende mit Hilfe von lösbaren Verriegelungsgliedern schwenkbar mit dem Rahmen 1 des Sattelaufliegers verbunden ist, um auf diese Art und Weise eine Schwenkachse zu bilden. Das Verschwenken erfolgt mit Hilfe von hydraulischen Pressen 33, die in der Fahrstellung platzsparend seitlich vom Drehkran 6 angeordnet sind. Die in Fig. 8 zu erkennen steile Hochstellbarkeit des Auslegerarms ermöglicht nicht nur das in dieser Figur gezeigte Ankippen des Containers, sondern darüber hinaus auch eine Fremdbeladung des Lkws mit Hilfe eines Krans in einem Containerbahnhof od.dgl. Es sei an dieser Stelle im übrigen darauf hingewiesen, daß der Ausdruck Container in diesem Zusammenhang grundsätzlich nicht einschränkend gemeint ist, sondern er bezieht sich auf jeden Aufbau, der im oberen Eckbereich mit Eckbeschlägen entsprechend den üblichen genormten Containereckbeschlägen versehen ist, um ein Hubgeschirr, insbesondere mit einem Kopfrahmen, daran befestigen zu können und den Aufbau somit durch Halterung im oberenEckbereich aufheben und absetzen zu können.

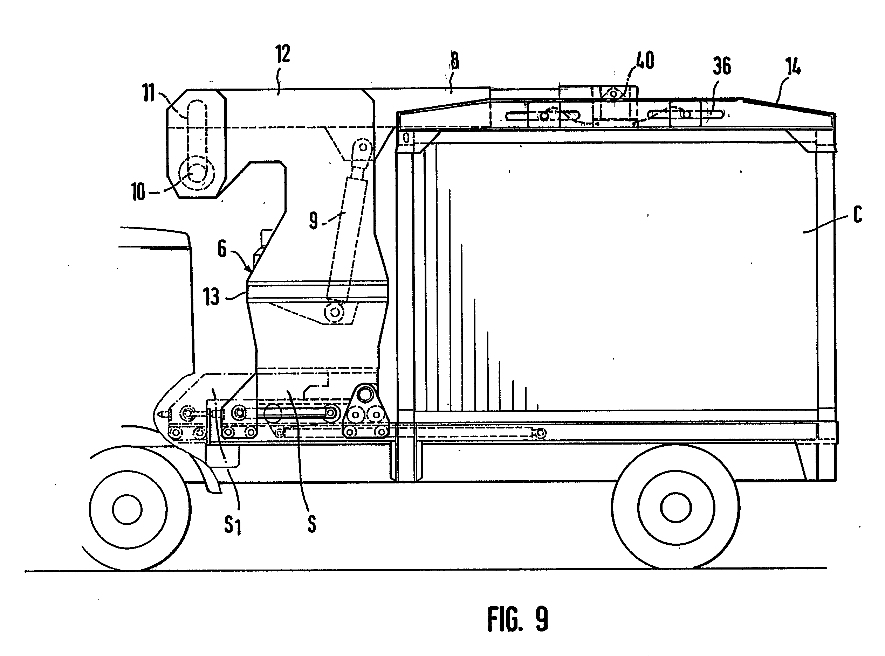

In den Figuren 9 bis 12 ist eine abgewandelte Ausführungsform der Erfindung speziell für Lkws dargestellt, wobei nicht nur eine andere Ausgestaltung des Wagens S vorgesehen ist, sondern auch eine andere Ausbildung des Drehlagers.

In dem gezeigten Ausführungsbeispiel ist der Wagen S mit einem ausschiebbaren vorderen Abschnitt S1 ausgestattet, um auf diese Weise einen größeren Abstand zwischen den vorderen und hinteren Laufrollen und damit eine bessere Krafteinleitung in die Laufschienen zu erreichen. Diese Ausfahrbarkeit des vorderen Teils des Wagens ist aber für sich bereits aus der genannten älteren Patentanmeldung bekannt und dort auch im einzelnen näher beschrieben.

Die beim Ausführungsbeispiel nach den Figuren 1 bis 8 unter Rollen des Kopfrahmens 14 (Spreaders) verfahrbare Beladeausgleichsplatte 17 ist im Ausführungsbeispiel nach den Figuren 9 bis 12 durch einen Rahmen 17' ersetzt, der aus zwei gleitend verschiebbar in den Doppel-T-Längsträgern 38 des Kopfrahmens 14 angeordneten Längsstreben 34 und zwei sie verbindenden Querstreben 35 besteht. Die Längsstreben 34 sind durch, Langlöcher 36 des Mittelschenkels 37 der Längsträger 38 durchsetzende, Bolzen mit auf der Außenseite angeordneten Gleitführungsplatten 39 längsverschiebbar geführt. Zur Verschiebung dieses Beladeausgleichsrahmens 17' dient im dargestellten Ausführungsbeispiel nur ein Hydraulikzylinder 32'.

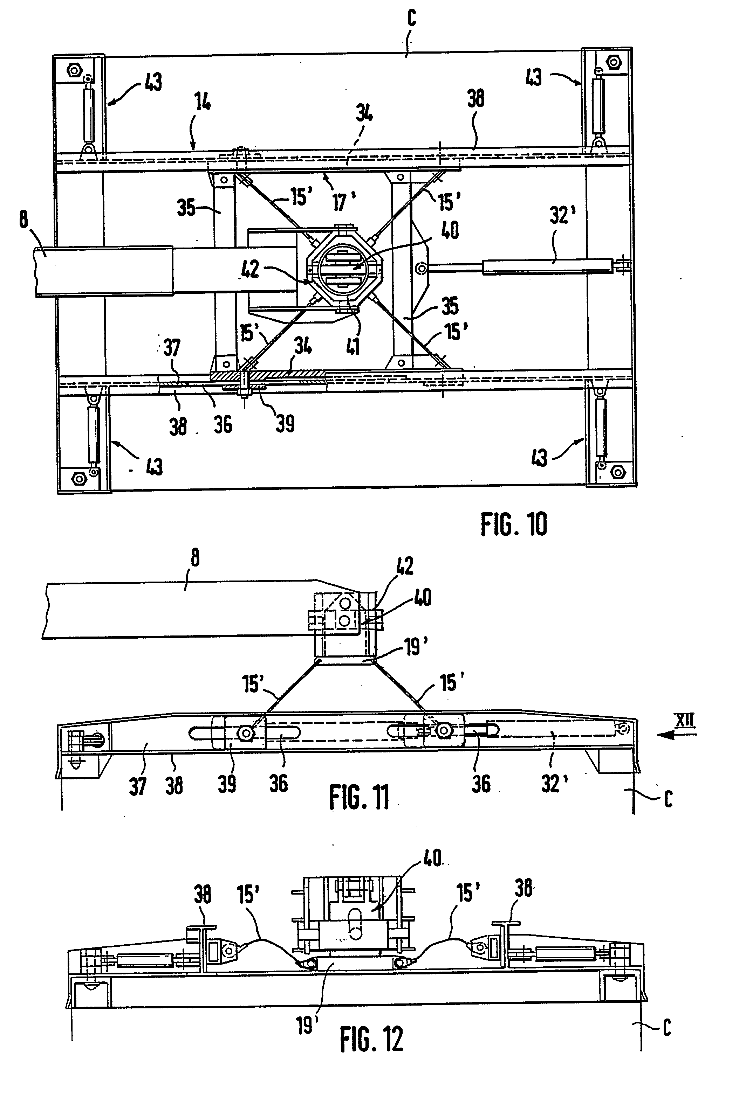

Anstelle des in den Kopfrahmen 14 eingebauten Drehlagers verwendet die Lkw-Lösung nach den Figuren 9 bis 12 einen Drehkopf 40, der in die Spitze des Auslegerarms 8 eingebaut ist, wobei grundsätzlich derartige Drehköpfe bereits handelsüblich erhältlich sind. Die Verbindung der unteren Drehplatte 19' mit dem Beladeausgleichsrahmen 17' erfolgt dabei nicht mehr, wie bei der Lösung nach den Figuren 1 bis 8 durch Tragstreben, sondern durch Seile 15'. Diese Seil-Lösung ist deshalb möglich, da bei Lkws wegen der entsprechend kleineren Ausbildung der Container erheblich geringere Lasten zu bewältigen sind, so daß eine Seilaufhängung durchaus ausreicht. Darüber hinaus hat eine solche Seilaufhängung den Vorteil, daß zum Absenken des Auslegerarms 8 auf den Container C nicht ein Aushaken der Streben erforderlich ist, da sich ja das Seil einfach in Schleifen legen kann, wie es in Fig. 12 angedeutet ist. Der innerhalb eines zylinderischen Rohrs 41 angeordnete Drehkopf 40 ist über eine kardanische Aufhängung 42 am vorderen Ende des Auslegerarms 8 aufgehängt. Bei 43 erkennt man die Aufnahmevorrichtung des Kopfrahmens 14 mit den Schließzylindern zum Einhaken in die oberen Containereckver-schlüsse des Containers C.

## Ansprüche

1. Nutzfahrzeug mit einem Fahrzeugrahmen, ggf. mit aufgesetztem Hilfsrahmen, zur Aufnahme eines wechselbaren langgestreckten Containers, auf dem auf Laufschienen ein mit einer Antriebs-vorrichtung versehener längsverschieblicher Wa-gen gelagert ist, der eine hydraulische Hubvorrichtung mit einem den Aufbau übergreifenden, ein Hubgeschirr zum Einhängen in die oberen Eckverschlüsse tragenden Auslegerarm zum Absetzen und Aufnehmen des Aufbaus trägt, dadurch gekennzeichnet, daß die Hubvorrichtung ein drehbar auf dem Wagen (S) angeordneter Drehkran (6) ist, dessen in Abstand vom Angriffspunkt eines hydrau-lischen Hubzylinders (9) angeordnete Schwenkwel-le (10) in vertikale Führungsschlitze (11) von Seitenwangen (12) des Krangestells eingreift, derart, daß der Auslegerarm (8) selbsttätig zwischen einer abgesenkten Fahrstellung und einer angehobenen Arbeitsstellung verstellbar ist, und daß das Hubgeschirr einen auf dem Container (C) aufliegenden Kopfrahmen (14) umfaßt, der über ein mit einer Antriebsvorrichtung (20) versehenes Drehlager (19) am Auslegerarm (8) aufgehängt ist.

2. Nutzfahrzeug nach Anspruch 1, dadurch gekennzeichnet, daß vier schwenkbar am Auslegerarm (8) aufgehängte Streben (15) in nach außen offene Haken am Kopfrahmen (14) eingreifen.

3. Nutzfahrzeug nach Anspruch 2, dadurch gekennzeichnet, daß die Haken jeweils durch die unterschnitte nen Enden (27) zweier parallel zueinander auf dem Drehteller (19) des Drehlagers befestigte Streben (26) gebildet sind.

4. Nutzfahrzeug nach Anspruch 2 oder 3, dadurch gekennzeichnet, daß das Drehlager (19) Teil einer im Kopfrahmen (14) mittels Hydraulikzylin-dern (32) längsverschiebbar gelagerten Beladeaus-gleichsplatte (17) ist.

5. Nutzfahrzeug nach einem der Ansprüche 1 bis 3, dadurch gekennzeichnet, daß das Drehlager Teil eines kardanisch am vorderen Ende des Auslegerarms 8 aufgehängten Drehkopfs (40) ist, der, vorzugsweise über Seilzüge (15'), mit einem im Kopfrahmen (14) mittels Hydraulikzylindern (32') längsverschiebbar gelagerten Beladeausgleichsrahmen (17') verunden ist.

6. Nutzfahrzeug nach Anspruch 5, dadurch gekennzeichnet, daß die Längsstreben (34) des Beladeausgleichsrahmens (17') mittels Länglöcher (36) der Längsträger (38) des Kopfrahmens (14) durchsetzender Bolzen längsverschiebbar geführt sind.

7. Nutzfahrzeug nach einem der Ansprüche 1 bis 6, dadurch gekennzeichnet, daß der Auslegerarm (8) teleskopisch ausfahrbar ist.

8. Nutzfahrzeug nach einem der Ansprüche 1 bis 7, gekennzeichnet durch den Aufbau (C) um eine hintere Schwenkachse in eine Kippstellung ver-schwenkende, seitlich des Krans (6) angeordnete hydraulische Pressen (33).

9. Nutzfahrzeug nach Anspruch 8, dadurch gekennzeichnet, daß der Container (C) auf einem schwenkbar auf dem Fahrzeugrahmen (1) angeordneten Containertragrahmen (2) mit Containereckverschlüssen (3) sitzt.

10. Nutzfahrzeug in Form eines Sattelaufliegers nach einem der Ansprüche 1 bis 9, dadurch gekennzeichnet, daß ein langgestreckter Wagen (S) mit dem vorderen Ende auf Laufflächen (5a) des höherliegenden Aufliegerrahmens (1a) und am hinteren Ende auf Laufflächen (5b) des tieferen Aufnahmerahmens (1b) für den Aufbau (C) verfahrbar ist.

11. Nutzfahrzeug in Form eines Lkw nach einem der Ansprüche 1 bis 9, dadurch gekennzeichnet, daß der dem Container (C) abgewandte vordere Abschnitt des Wagens (S) zur besseren Krafteinleitung in die Schienen (5) ausfahrbar ist.

FIG. 1

EP 0 328 878 A2

FIG. 2

FIG. 4

FIG. 3

EP 0 328 878 A2

FIG. 5

EP 0 328 878 A2

FIG. 6

FIG. 7

FIG. 8

FIG. 9

EP 0 328 878 A2

FIG. 10

FIG. 11

FIG. 12